# DEMANDE DE BREVET EUROPEEN

(11) **EP 4 703 516 A1**
(43) Date de publication de la demande: **04.03.2026**
(21) Numéro de dépôt: 25193525.0
(22) Date de dépôt: 01.08.2025
(51) Int. Cl.: E01C 23/16, E01C 23/18, A63C 19/06, B65H 37/00, B65G 1/04, B65G 1/137

(54) **DISPOSITIF, PROCÉDÉ POUR RÉALISER DES DÉPLACEMENTS SUIVANT UNE TRAJECTOIRE RECTILIGNE ET UTILISATION DE CE DISPOSITIF**

(30) Priorité: 03.09.2024 FR 2409356
(71) Demandeur: Exotec Product France, 59170 Croix (FR)
(72) Inventeur: Chatain, Marc, 68230 ZIMMERBACH (FR); Malemanche, Thomas, 59800 LILLE (FR); François, Jean-Guillaume, 59000 LILLE (FR)
(74) Mandataire: Plasseraud IP

(57) **Abrégé**

Dispositif (46) configuré pour se déplacer suivant une trajectoire rectiligne, le dispositif comprenant un châssis (50) ; un moyen de déplacement (52) motorisé configuré pour déplacer le châssis suivant la trajectoire rectiligne ; un panneau (54) avec une position de référence (76), le panneau agissant comme récepteur d'un émetteur (48) de lumière dirigé vers le dispositif ; un capteur optique (56) comprenant un champ de vision incluant au moins la position de référence (76); et un processeur configuré pour : détecter un motif lumineux (49) dans le champ de vision du capteur optique (56); comparer la position du motif lumineux (49) sur le panneau (54) par rapport à la position de référence (76); commander le moyen de déplacement (52) motorisé pour corriger une déviation entre la position du motif lumineux (49) et la position de référence (76).

## Description

### Domaine technique

La présente divulgation relève du domaine des techniques de déplacement et de guidage pour réaliser des déplacements rectilignes.

### Technique antérieure

Les déplacements rectilignes sont typiquement nécessaires pour réaliser des marquages au sol, par exemple en entrepôt. Les marquages au sol permettent par la suite la navigation de véhicules autonomes servant à la récupération d'articles stockés dans l'entrepôt. Les véhicules autonomes peuvent suivre le marquage au sol et mesurer une distance parcourue pour déterminer leur position dans l'entrepôt. Comme les véhicules autonomes peuvent circuler dans des passages étroits entre les montants des racks de stockage d'articles, le marquage doit être suffisamment ajusté pour éviter que les véhicules autonomes heurtent les montants.

Classiquement, le marquage au sol est réalisé manuellement par un opérateur, par exemple par application de ruban adhésif ou de peinture. Le marquage au sol peut notamment être appliqué en suivant une ligne projetée par un laser, ou par une règle positionnée successivement sur le sol.

Cependant, une telle application manuelle est peu précise. L'opérateur doit naviguer dans un environnement complexe, avec les passages étroits formés entre les montants des racks de stockage et des obstacles à traverser. Le marquage obtenu n'est pas suffisamment précis pour être suivi par un véhicule autonome.

Le document FR 3138453 A1 décrit un dispositif pour l'application d'un marquage au sol comprenant un capteur optique linéaire adapté à détecter un laser plan. Le laser plan émet selon un plan vertical et le capteur optique linéaire est configuré pour détecter le plan du laser. Le capteur optique linéaire peut détecter le plan vertical du laser quelle que soit la planéité du terrain. Le dispositif peut ainsi suivre le laser plan pour appliquer le marquage suivant une trajectoire rectiligne, indépendamment des aspérités du sol.

Cependant, il a été constaté qu'au-delà de vingt mètres entre l'émetteur de laser plan et le dispositif, la divergence du faisceau lumineux émit par le laser plan ne permet plus au capteur optique linéaire de détecter les variations de trajectoire de sorte que le dispositif n'a plus de repère permettant de guider son déplacement. De plus, la taille relativement petite du capteur optique linéaire entraine régulièrement la perte du laser plan par ce capteur optique linéaire. Dès lors, le dispositif décrit dans le document FR 3138453 A1 n'est pas adapté à un marquage au sol sur des distances supérieures à vingt mètres.

Les documents EP1988360 et US8596217 décrivent un chariot de marquage au sol, notamment pour marquer les lignes d'un terrain de sport, comprenant une unité d'application du marquage et un capteur optique, tel qu'un capteur CCD. Le capteur optique détermine la position relative du chariot de marquage ou de l'unité d'application par rapport à un plan de référence défini par un faisceau de référence. Le faisceau de référence est émis par un générateur placé à distance du chariot. Le principe de guidage de ce chariot est donc similaire à celui du document FR 3138453 A1 cité ci-dessus, avec les mêmes inconvénients.

### Résumé

Il est proposé un dispositif configuré pour se déplacer suivant une trajectoire rectiligne, le dispositif comprenant :
- un châssis ;
- un moyen de déplacement motorisé, monté sur le châssis, le moyen de déplacement étant configuré pour déplacer le châssis suivant la trajectoire rectiligne ;
- un panneau, monté sur le châssis, le panneau agissant comme récepteur d'un émetteur de lumière dirigé vers le dispositif ;
- un capteur optique comprenant un champ de vision, ledit champ de vision comprenant au moins une portion de la surface du panneau, ladite portion comprenant une position de référence; et
- un processeur configuré pour :
   - détecter un motif lumineux provenant d'un émetteur de lumière dans le champ de vision du capteur optique;
   - comparer la position du motif lumineux sur le panneau par rapport à la position de référence;
   - commander le moyen de déplacement motorisé pour corriger une déviation entre la position du motif lumineux et la position de référence.

Ainsi; le dispositif peut être guidé par le motif lumineux intercepté par le panneau. Le dispositif peut suivre la référence fixe qu'est le motif lumineux sur des distances pouvant atteindre plusieurs dizaines de mètres.

Optionnellement, la position de référence peut correspondre au centre d'un repère du panneau. Notamment le repère est formé par les quatre coins d'un rectangle.

Optionnellement, le champ de vision du capteur optique peut comprendre une largeur de la surface du panneau supérieure à 100 mm, de préférence supérieure à 140 mm, et une longueur de la surface du panneau supérieure à 100 mm, de préférence supérieure à 150 mm. La surface de détection du motif lumineux est suffisamment étendue pour ne pas perdre de vue le motif lumineux lors du déplacement du dispositif, même lorsque le sol présente des irrégularités de surface. Le risque que le dispositif perde de vue le motif lumineux est réduit.

Optionnellement, le dispositif peut comprendre en outre un moyen de marquage monté sur le châssis, le moyen de marquage étant configuré pour appliquer un marquage au sol, et le panneau est monté sur le châssis au voisinage du moyen de marquage. Ainsi, on évite un décalage entre la détection d'une déviation de la trajectoire rectiligne définie par la projection du motif lumineux et l'application du marquage. On peut ainsi corriger une éventuelle déviation du dispositif avant que le marquage au sol ne soit affecté.

On entend par « au voisinage du moyen de marquage » le fait que le panneau est agencé, suivant un axe longitudinal du châssis, à une distance du moyen de marquage inférieure à la moitié de la longueur du châssis suivant ledit axe longitudinal, par exemple à une distance du moyen de marquage inférieure à un tiers de la longueur du châssis.

Optionnellement, le moyen de déplacement motorisé peut comprendre : un train directionnel monté sur une première extrémité du châssis et adapté à contrôler la direction de déplacement du dispositif, et un moyen d'avancement monté sur une deuxième extrémité du châssis, opposée à la première extrémité et configuré pour assurer le déplacement du dispositif. Le train directionnel peut former l'avant du dispositif pour contrôler la direction du dispositif par pivot autour du moyen d'avancement. Une erreur de position du motif lumineux par rapport à la position de référence peut être convertie en une erreur de rotation autour du point pivot, assurant que le dispositif suit continuellement une trajectoire rectiligne.

Optionnellement, le moyen d'avancement et le moyen de marquage peuvent comprendre un même galet applicateur configuré à la fois pour appliquer une bande adhésive au sol et pour assurer le déplacement du dispositif. Le galet applicateur permet à la fois la progression du dispositif selon la trajectoire rectiligne et l'application de la bande adhésive, en appliquant une pression sur la bande adhésive contre le sol pendant le déplacement du dispositif. La bande adhésive déposée ne dévie pas de la trajectoire rectiligne, permettant un marquage précis.

Optionnellement, le dispositif peut comprendre un indicateur configuré pour indiquer lorsque le motif lumineux est projeté sur la position de référence sur le panneau. Ainsi, un utilisateur peut positionner le dispositif dans une position initiale dans laquelle le motif lumineux est projeté sur la position de référence du panneau. Il est également possible pour un opérateur de suivre les dérives du véhicule en fonctionnement.

Selon un autre aspect, il est proposé un ensemble de guidage linéaire comprenant :
- le dispositif ci-dessus, et
- un émetteur configuré pour émettre un motif lumineux, l'émetteur étant positionné à distance du dispositif.

L'émetteur fourni le motif lumineux qui permet de guider le déplacement du dispositif selon la trajectoire rectiligne.

Optionnellement, l'émetteur peut être un émetteur laser, notamment laser ponctuel émettant un motif lumineux en forme de disque. Le motif lumineux est alors facile à détecter sur le panneau et ne nécessite pas de traitement d'image complexe par le processeur.

Optionnellement, l'émetteur peut émettre sur une distance supérieure à 20 mètres. Le dispositif peut se déplacer sur des distances relativement élevées, par exemple pour réaliser des marquages au sol en entrepôt.

Selon un autre aspect, il est proposé un procédé pour réaliser des déplacements rectilignes comprenant :
- placer, par un utilisateur, le dispositif ci-dessus à distance d'un émetteur de lumière, de sorte à projeter un motif lumineux sur la position de référence sur le panneau du dispositif;
- commander, par le processeur, le moyen de déplacement motorisé pour entrainer le déplacement du dispositif ;
- détecter, par le capteur optique, le motif lumineux dans le champ de vision du capteur optique;
- comparer, par le processeur, la position du motif lumineux sur le panneau par rapport à la position de référence sur le panneau ;
- commander, par le processeur, le moyen de déplacement motorisé pour corriger une déviation entre la position du motif lumineux et la position de référence.

Ainsi; le dispositif peut être guidé par le motif lumineux intercepté par le panneau. Le dispositif peut suivre la référence fixe qu'est le motif lumineux sur des distances pouvant atteindre plusieurs dizaines de mètres.

Optionnellement, le moyen de déplacement peut comprendre un moyen d'avancement comprenant un galet applicateur, et le déplacement du dispositif peut comprendre la rotation du galet applicateur pour déplacer le dispositif et, conjointement, appliquer une bande adhésive au sol. Le galet applicateur permet à la fois la progression du dispositif selon la trajectoire rectiligne et l'application de la bande adhésive, en appliquant une pression sur la bande adhésive contre le sol pendant le déplacement du dispositif. La bande adhésive déposée ne peut pas dévier de la trajectoire rectiligne, permettant un marquage précis.

Optionnellement, le moyen de déplacement motorisé peut comprendre un train directionnel adapté à contrôler la direction de déplacement du dispositif ; et la commande du moyen de déplacement pour corriger la déviation peut comprendre : une activation du train directionnel pour rapprocher la position du motif lumineux sur le panneau et la position de référence sur le panneau. Le train directionnel permet de contrôler la direction du dispositif, assurant que le dispositif suit continuellement le motif lumineux.

Optionnellement, placer le dispositif peut comprendre positionner le dispositif jusqu'à ce qu'un indicateur du dispositif indique que le motif lumineux est projeté sur la position de référence sur le panneau. On assure ainsi le bon positionnement initial du dispositif par un utilisateur.

Selon un autre aspect, il est proposé une utilisation du dispositif, ou de l'ensemble, ou encore de la méthode, pour l'application d'un marquage au sol linéaire, en particulier de bande adhésive, servant au guidage de véhicules à guidage automatique dans des entrepôts de stockage.

### Brève description des dessins

D'autres caractéristiques, détails et avantages apparaîtront à la lecture de la description détaillée ci-après, et à l'analyse des dessins annexés, sur lesquels :
**Fig. 1**

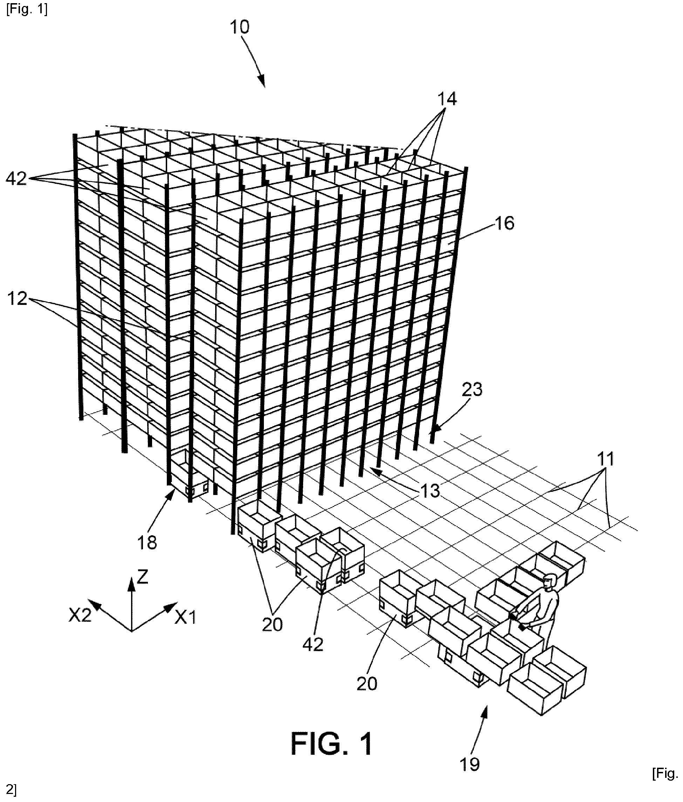

   [Fig. 1] illustre schématiquement un système de stockage et de récupération automatisé (ASRS) selon un mode de réalisation.
**Fig. 2**

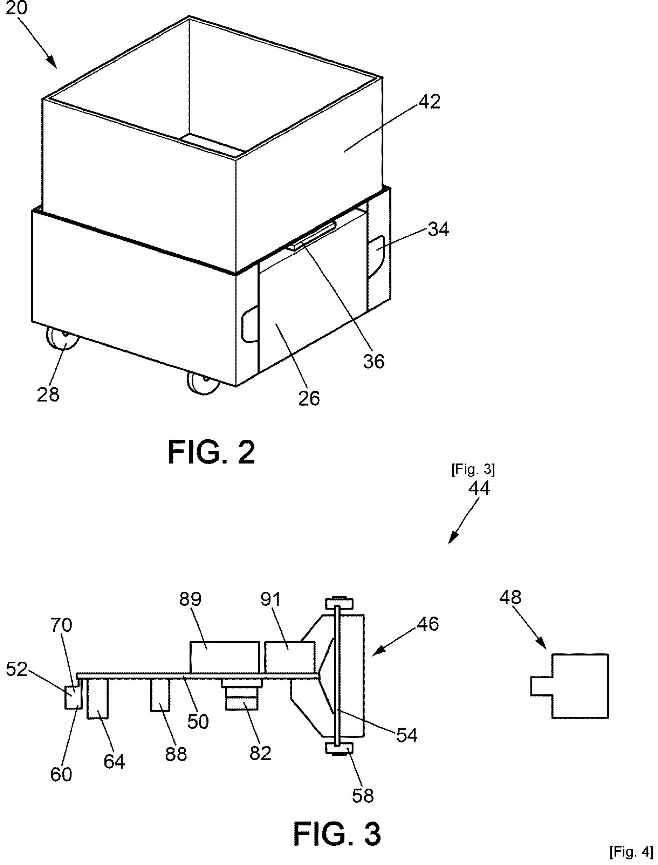

   [Fig. 2] illustre schématiquement un véhicule autonome pouvant être mis en œuvre dans l'ASRS de la fig. 1 selon un mode de réalisation.
**Fig. 3**
   [Fig. 3] illustre schématiquement un ensemble de guidage linéaire pouvant être mis en œuvre dans l'ASRS de la fig. 1 selon un mode de réalisation.
**Fig. 4**

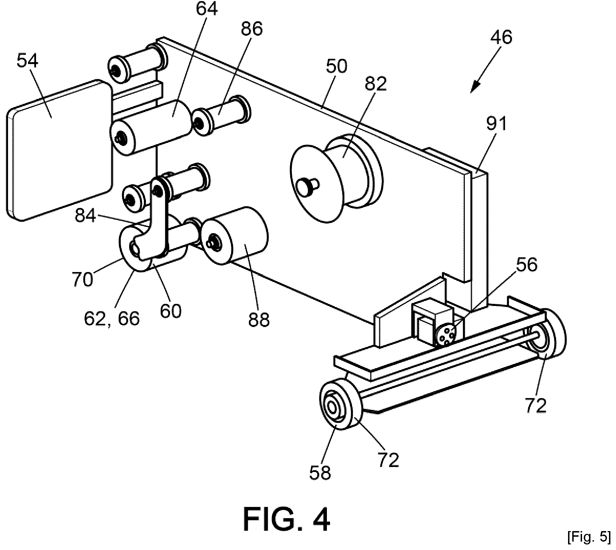

   [Fig. 4] illustre schématiquement une vue en perspective d'un dispositif configuré pour se déplacer en suivant une trajectoire rectiligne pouvant être mis en œuvre dans l'ensemble de la fig. 3 selon un mode de réalisation.
**Fig. 5**

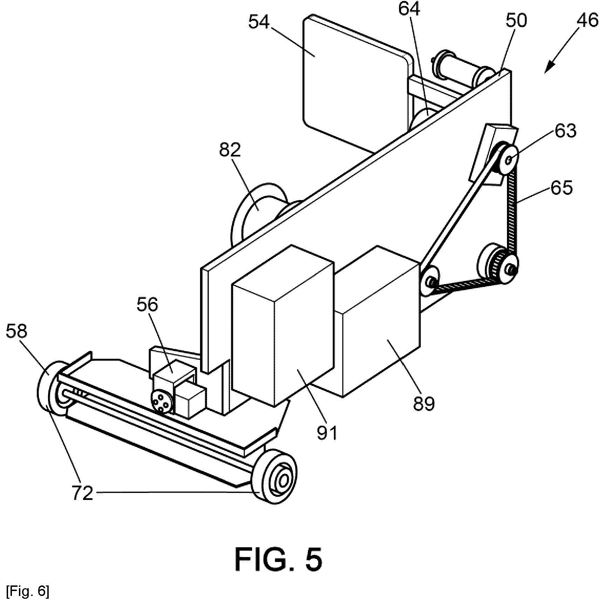

   [Fig. 5] illustre schématiquement une vue selon une perspective différente du dispositif de la figure 4 selon un mode de réalisation.
**Fig. 6**

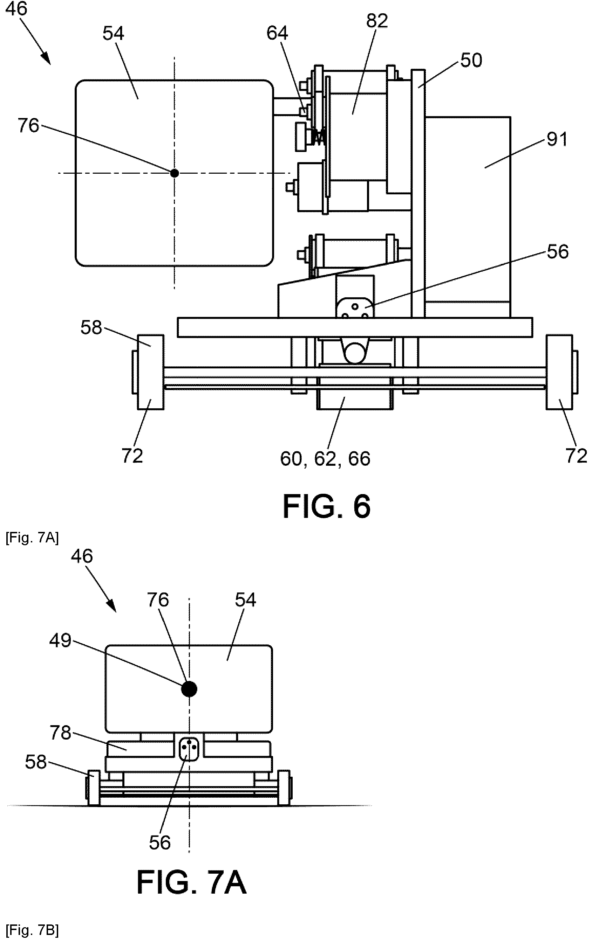

   [Fig. 6] illustre schématiquement une vue de face du dispositif de la fig. 4 selon un mode de réalisation.
**Fig. 7A** **et** **Fig. 7B**

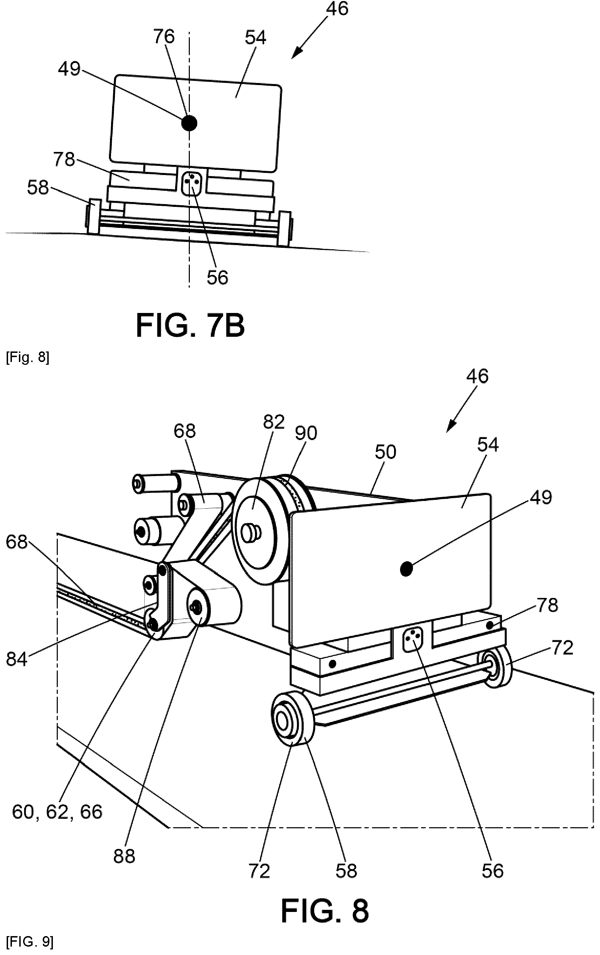

   [Fig. 7A] et [Fig. 7B] illustrent schématiquement une vue de face d'un dispositif configuré pour se déplacer en suivant une trajectoire rectiligne, lors de sa mise en œuvre dans l'ensemble de la fig. 3 selon un mode de réalisation.
**Fig. 8**
   [Fig. 8] illustre schématiquement une vue en perspective du dispositif de la fig. 7A lors de sa mise en œuvre dans l'ensemble de la fig. 3 selon un mode de réalisation.
**Fig. 9**

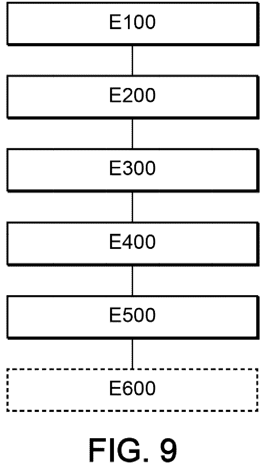

   [Fig. 9] montre un organigramme d'un procédé pour réaliser des trajectoires rectilignes selon un mode de réalisation.

### Description des modes de réalisation

La figure 1 illustre schématiquement un système de stockage et de récupération automatisé ASRS 10 (de l'anglais *« Automated storage and retrieval system »*)*.* Un tel système 10 est utilisé dans les entrepôts pour le stockage d'articles.

L'ASRS 10 comprend notamment au moins deux, en particulier plusieurs, racks de stockage 12, pouvant aussi être désignés par le terme de « rayonnages », destinés à recevoir des articles pour leur stockage. Les racks de stockage 12 s'étendent avantageusement en hauteur (direction verticale Z), jusqu'à une hauteur maximale supérieure ou égale à 10 m, en particulier supérieure ou égale à 12 m, de préférence supérieure ou égale à 14 m.

Chacun des racks de stockage 12 comporte des colonnes consécutives 14 d'alvéoles, les alvéoles 16 de chacune des colonnes d'alvéoles 14 étant superposés sur plusieurs niveaux selon la direction verticale Z entre un niveau inférieur et un niveau supérieur. En particulier, chacun des alvéoles 16 définit un emplacement de stockage destiné à recevoir un bac 42 contenant un ou plusieurs articles.

Les racks de stockage 12 sont agencés de sorte à former au moins une allée de circulation 18 entre des racks de stockage 12 respectifs. Plus précisément, au moins une allée de circulation 18, de préférence plusieurs allées de circulation 18, s'étendent suivant une direction longitudinale X1 entre deux racks de stockage 12 respectifs. En outre, au moins une allée de circulation 18, de préférence plusieurs allées de circulation 18, s'étendent suivant une direction transversale X2 entre deux racks de stockage 12 respectifs. Les allées de circulation 18 permettent à des véhicules autonomes 20 et/ou des opérateurs de se déplacer au sein de l'ASRS 10 pour récupérer des articles qui y sont stockés. Les allées de circulation 18 ont par exemple une largeur entre deux racks de stockage de 800 mm, de 600 mm, voire de 400 mm.

Dans un exemple, chaque colonne 14 d'alvéoles 16 peut comprendre des espaces libres 23 s'étendant verticalement entre le niveau du sol de l'ASRS 10 et une alvéole 16 d'un niveau inférieur de la colonne 14 d'alvéoles, au voisinage du sol. Les racks de stockage 12 comprennent ainsi des passages 13 s'étendant au niveau du sol, chaque passage 13 passant par l'espace libre 23 de l'une des colonnes 14 de chaque rack de stockage 12. Ces passages 13 permettent au véhicule autonome 20 d'accéder plus directement à une position déterminée dans une allée de circulation 18, sans que le véhicule 20 n'ait à se déplacer le long de ladite allée de circulation 18.

Comme illustré sur la figure 1, le sol de l'ASRS comprend un marquage 11. Le marquage 11 peut par exemple être des bandes adhésives appliquées sur le sol. Ici, le marquage 11 est formé par une pluralité de premières lignes droites parallèles s'étendant selon la direction longitudinale X1 et une pluralité de deuxièmes lignes droites parallèles s'étendant selon la direction transversale X2. Le marquage forme ainsi un quadrillage sur le sol de l'entrepôt. Les lignes droites du marquage 11 peuvent s'étendre sur une distance supérieure à 40 m, supérieure à 60 m, voir supérieure à 80 m. Les lignes droites peuvent s'étendre dans les allées de circulation 18 de l'ASRS 10 et/ou passer dans les espaces libres 23 sous les racks de stockage 12.

L'ASRS 10 peut en outre comprendre au moins un véhicule autonome 20, de préférence une pluralité de véhicules 20. Le véhicule 20 peut être un AGV, l'acronyme AGV désignant « *Automated Guided Vehicle* ». Dans la réalisation de la figure 1, chaque véhicule autonome 20 se déplace dans l'ASRS 10 au sol et selon la direction verticale Z pour récupérer et/ou déposer les bacs 42 stockés dans les alvéoles 16 des racks de stockage 12. Le véhicule autonome 20 peut en particulier se déplacer au sol de l'ASRS 10 à l'aide du marquage 11 au sol.

Comme plus visible à la figure 2, le véhicule autonome 20 comprend un châssis 26, typiquement de forme parallélépipédique, et des moyens de déplacements 28 motorisés montés sur le châssis 26. Les moyens de déplacements 28 permettent de réaliser les déplacements au sol du véhicule autonome 20. Les moyens de déplacements 28 permettent au véhicule autonome 20 de se déplacer au sol de l'entrepôt, en particulier dans les allées de circulation 18 et/ou dans les passages 13 entre le sol et les alvéoles 16 de niveau inférieur. En particulier, le véhicule autonome 20 peut se déplacer en suivant le marquage 11 appliqué sur le sol de l'ASRS. Le véhicule autonome 20 peut suivre le marquage 11 et mesurer une distance parcourue pour déterminer sa position dans l'entrepôt.

Le véhicule autonome 20 comprend également des moyens de grimpe 34 (en position rétractée sur la figure 2) adaptés pour coopérer avec des montants des racks de stockage 12 donnant sur ladite colonne 14 d'alvéole. Les moyens de grimpe 34 sont par exemple agencés aux quatre coins du châssis 26. Les moyens de grimpe 34 permettent d'assurer un déplacement selon la direction verticale Z du véhicule 20 le long des racks de stockage 12, en coopérant typiquement avec des éléments de grimpe agencés sur les montants. Le véhicule autonome 20 peut ainsi accéder à l'ensemble des alvéoles 16 de la colonne d'alvéoles 14 afin de placer ou de récupérer un bac 42 de l'alvéole 16.

Le véhicule autonome 20 comprend en outre des moyens de chargement 36 rétractables (en position rétractée sur la figure 2) adaptés à extraire et insérer des bacs 42 dans les alvéoles 16 du rack de stockage 12, et à les positionner sur le châssis 26 du véhicule autonome 20.

L'ASRS 10 peut en outre comprendre une station de chargement et/ou déchargement de conteneur tel qu'un bac 42. Cette station peut comprendre un système de déchargement qui est configuré pour décharger un bac 42 du véhicule autonome 20, en vue d'une livraison, et un système de chargement qui est configuré pour charger le bac 42 sur le véhicule autonome 20 en vue du transfert du bac 42 jusqu'à un rack de stockage 12, lors d'un réassort.

L'ASRS peut en outre comprendre un poste de préparation de commande 19 au niveau duquel un opérateur ou un bras robotique prélève un article d'une commande d'un bac amené par un véhicule autonome.

La figure 3 montre un ensemble de guidage linéaire 44. L'ensemble de guidage linéaire 44 est par exemple adapté à la réalisation d'un marquage au sol suivant des lignes droites, par exemple pour la réalisation du marquage 11 servant à la navigation précise du véhicule autonome 20 dans l'ASRS 10.

L'ensemble de guidage linéaire 44 comprend un dispositif 46 configuré pour se déplacer suivant une trajectoire rectiligne et un émetteur 48 configuré pour émettre un motif lumineux 49 sur une surface telle qu'un panneau, le motif lumineux étant adapté à guider le dispositif 46. Par « trajectoire rectiligne » on entend une trajectoire qui ne dévierait que de plus ou moins 1,5 millimètres d'une ligne droite parfaite sur une distance d'une centaine de mètres.

Aux fins de suivre la trajectoire rectiligne, le dispositif 46 comprend essentiellement un châssis 50, un moyen de déplacement motorisé 52, un panneau 54, un capteur optique 56, et un processeur (non visible). Lorsque le dispositif 46 est adapté à la réalisation d'un marquage au sol, le dispositif 46 comprend en outre un moyen de marquage 70.

Le châssis 50 prend ici la forme d'une plaque sensiblement plane. Le châssis 50 peut par exemple être une plaque métallique ou plastique, découpée au laser. Le châssis 50 permet l'assemblage du dispositif 46, en formant une surface de montage.

Le moyen de déplacement motorisé 52 comprend un train directionnel 58 et un moyen d'avancement 60, montés sur le châssis 50.

Le moyen d'avancement 60 comprend ici un galet 62. Le galet 62 est monté sur une première extrémité du châssis 50 destinée à former l'arrière du dispositif 46 lorsque le dispositif 46 se déplace. Le galet 62 est notamment une pièce cylindrique commandée en rotation par un moteur 64. Le galet peut être relié à un arbre de sortie 63 du moteur 64 par une courroie 65 (fig. 5). Le galet 62 assure le mouvement du dispositif 46 vers l'avant. Selon un exemple de réalisation décrit plus en détails plus loin, lorsque le dispositif 46 est adapté à l'application du marquage au sol, en particulier sous forme de bande adhésive 68, le galet 62 est un galet applicateur 66 assurant, conjointement au mouvement du dispositif 46, l'application d'une pression sur une bande adhésive 68 alimentée entre le sol et le galet applicateur 66.

Le train directionnel 58 est monté sur une deuxième extrémité du châssis 50 opposée à la première extrémité sur laquelle est monté le moyen d'avancement 60. Le train directionnel 58 est destiné à former l'avant du dispositif 46 lorsque le dispositif 46 se déplace. Le train directionnel 58 est configuré pour contrôler la direction du dispositif 46 depuis l'avant du dispositif 46. Dès lors, une erreur de position du dispositif 46 peut être convertie en une rotation à effectuer autour du point pivot, ici défini par le galet 62. Le galet 62 étant derrière le train directionnel 58 lorsque le dispositif 46 se déplace, la correction de position peut être lissée pendant le déplacement du dispositif 46. On évite un changement de direction brusque du dispositif 46 en déplacement.

Le train directionnel 58 comporte ici deux roues orientables 72 disposées de part et d'autre du châssis 50. Le dispositif 46 est un tripode, avec trois points de contact sur le sol, à savoir le galet 62 et chacune des roues orientables 72. La configuration en tripode confère au dispositif 46 un équilibre isostatique. L'orientation des roues orientables 72 est commandée au moyen d'un moteur.

Ici, une distance entre le moyen d'avancement 60 et le train directionnel 58 est comprise entre 500 mm et 600 mm, de préférence 550 mm. Une distance entre les deux roues orientables 72 est par exemple comprise entre 300 mm et 400 mm, de préférence 330 mm. De tels empattements permettent de compenser les défauts du sol et de garantir une trajectoire rectiligne du dispositif 46 avec une déviation inférieure à 1,5 mm sur une ligne droite de plus de 100 m.

Le panneau 54 est ici une plaque de matériau opaque, par exemple une plaque de matériau plastique. Le panneau 54 est adapté à intercepter le motif lumineux 49 émis par l'émetteur 48 positionné à distance du dispositif 46. Le motif lumineux 49 peut par exemple être un disque de lumière. Le disque de lumière peut être intercepté par le panneau 54 pour permettre au dispositif 46 de détecter une éventuelle déviation de la trajectoire rectiligne.

Le panneau 54 est notamment positionné sur l'extrémité du châssis 50 comportant le moyen de marquage 70, en particulier le galet applicateur 66 lorsque le dispositif 46 est adapté à l'application du marquage 11 au sol sous forme de bande adhésive 68. L'éventuelle déviation du dispositif 46 de la trajectoire rectiligne peut être détectée au moment de l'application du marquage au sol. Il n'y a pas de décalage entre la détection de la déviation et l'application du marquage. La trajectoire du dispositif 46 peut être corrigée pour éviter une déviation du marquage appliqué. Dans l'exemple des figures 4 à 6, le panneau 54 est positionné à l'arrière du dispositif 46 lorsque le dispositif 46 se déplace. Alternativement, comme illustré aux figures 7 et 8, le panneau 54 pourrait être positionné sur une extrémité du châssis 50 destiné à former l'avant du dispositif 46 lorsque le dispositif 46 se déplace, pour faire face à l'émetteur 48.

Le panneau 54 comprend une position de référence 76. La détection d'une éventuelle déviation du dispositif 46 de la trajectoire rectiligne peut être réalisée par comparaison de la position du motif lumineux 49 sur le panneau 54 par rapport à la position de référence 76, comme il sera décrit plus en détails plus loin. La position de référence 76 peut par exemple être le centre d'un rectangle. Le périmètre du rectangle ou les quatre coins du rectangle peuvent être marqués ou autrement gravés sur le panneau 54.

Le capteur optique 56 peut être tout type de capteur adapté à acquérir des images du motif lumineux 49 sur le panneau 54. Le capteur optique 56 est orienté vers le panneau 54, de sorte à capter le motif lumineux 49 projeté sur le panneau 54 par l'émetteur 48. Autrement dit, le capteur optique 56 est agencé dans la direction d'émission de l'émetteur 48. Le capteur optique 56 est par exemple une caméra. Le capteur optique 56 est monté sur le châssis 50 de sorte qu'un champ de vision du capteur optique 56 comprenne au moins une portion de la surface du panneau 54, en particulier une portion du panneau comportant la position de référence 76. Le champ de vision peut par exemple être un rectangle dont le centre est confondu avec le centre du rectangle formant la position de référence 76. Le rectangle du champ de vision peut par exemple avoir une longueur de 154 mm et une largeur de 140 mm. Le capteur optique 56 peut détecter le motif lumineux 49 sur le panneau 54 même lorsqu'une déviation importante existe entre le centre du panneau 54 et la position du motif lumineux 49. On évite ainsi que le dispositif 46 perde de vu le motif lumineux 49 lors de son déplacement.

Par exemple, la résolution de la caméra peut être comprise entre 10 et 15 millions de pixels, de préférence 12 millions de pixels. Les images acquises par la caméra peuvent comprendre entre 20 et 50 pixels/mm de préférence 30 pixels/mm environ. Le panneau 54 représente 4600 points dans la largeur et 2600 points dans la hauteur. La cadence d'images par seconde (fps) peut être au minimum de 15 fps pour éviter un retard entre la déviation du dispositif 46 et la détection de ladite déviation.

Le processeur est par exemple embarqué sur le châssis 50. Le processeur est configuré pour traiter les images acquises par le capteur optique 56 pour détecter l'éventuelle déviation entre la position de référence 76 et la position du motif lumineux 49 sur le panneau 54, comme décrit plus en détails plus loin. En fonction de la comparaison, le processeur peut commander le moyen de déplacement 52, en particulier le train directionnel 58, pour rapprocher la position du motif lumineux 49 de la position de référence 76.

Le dispositif 46 peut en outre comprendre des indicateurs 78, en particulier des indicateurs visuels ou sonores. Les indicateurs 78 peuvent s'allumer ou émettre un son lorsque la position du motif lumineux 49 et la position de la position de référence 76 sont confondus sur le panneau 54. Les indicateurs 78 sont ici deux diodes placées de part et d'autre du dispositif 46, en particulier à l'avant du dispositif 46 lorsqu'il se déplace, en particulier au voisinage de chacune des roues 72 du train directionnel 58. Une première diode gauche peut par exemple servir à indique une déviation vers la droite et une deuxième diode droite peut par exemple servir à indiquer une déviation vers la gauche de la position du motif lumineux 49 par rapport à la position de référence 76. Ces indicateurs 78 peuvent permettre à un opérateur de placer le dispositif 46 dans une position initiale face à l'émetteur 48 dans laquelle le motif lumineux 49 est intercepté sur la position de référence 76 du panneau 54, et de contrôler le déplacement du dispositif 46.

Dans le cas où le dispositif 46 est adapté à la réalisation d'un marquage au sol, le moyen de marquage 70 peut par exemple être un moyen adapté à l'application de la bande adhésive 68 au sol. Un tel marquage ne risque pas de baver, et est ainsi particulièrement adapté à guider des véhicules automatiques 20 au sein de l'entrepôt. Par exemple, le galet 62 du moyen de déplacement est un galet applicateur 66 adapté à, conjointement déplacer le dispositif 46 et appliquer la bande adhésive au sol. Le moyen de marquage 70 comprend en outre une bobine débitrice 82, une pièce de guidage 84, au moins un tambour tendeur 86 et, éventuellement une bobine de récupération 88.

La bobine débitrice 82 est montée sur le châssis 50. La bobine débitrice 82 prend la forme d'un cylindre à rebord. Un rouleau de bande adhésive 90 peut être monté sur la bobine débitrice 82. Le marquage 11 au sol prend la forme de bandes adhésives 68 déroulée depuis la bobine débitrice 82 vers le galet applicateur 66. Le rouleau 90 de bande adhésive 68 est notamment monté en porte à faux sur la bobine débitrice 82. Le rouleau 90 est alors accessible (il n'est pas prévu de boitier autour du rouleau), de sorte qu'il est facile de remplacer le rouleau 90 lorsque la bande adhésive 68 du rouleau est épuisée.

La pièce de guidage 84 forme un guide d'insertion de la bande adhésive 68 déroulée entre le galet applicateur 66 et le sol. La pièce de guidage 84 assure un bon positionnement de la bande adhésive 68 déroulée entre le galet applicateur 66 et le sol, pour assurer un positionnement précis de la bande adhésive 68 déroulée sur le sol.

Le tambour tendeur 86 est monté à rotation sur le châssis 50. Le tambour tendeur 86 est monté sensiblement au-dessus du galet applicateur 66, pour former un point d'inflexion de la bande adhésive 68 lorsque la bande adhésive 68 est déroulée depuis la bobine débitrice 82. Ainsi, la bande adhésive 68 déroulée s'étendant entre la bobine débitrice 82 et le galet applicateur 66 est mise sous tension par le tambour tendeur 86 et peut être plaquée contre la pièce de guidage 84. La bande adhésive 68 peut être déroulée depuis la bobine débitrice 82, être mise en tension par le tambour tendeur 86, être plaquée contre la pièce de guidage 84 avant d'être appliquée en pression contre le sol par le galet applicateur 66.

Le tambour tendeur 86 est notamment entrainé en rotation par le moteur 64 entrainant également le galet 62, en particulier le galet applicateur 66. Le tambour tendeur 86 peut être relié à l'arbre de sortie 63 du moteur 64 par la courroie 65. Ainsi, le tambour tendeur 86 entraine la bande adhésive 86 depuis la bobine débitrice 86 vers le galet applicateur 66 conjointement à l'avancée du dispositif 46.

La bobine de récupération 88 est montée à rotation sur le châssis 50. La bobine de récupération 88 est ici une pièce cylindrique creuse commandée en rotation par le moteur 64 commandant également le galet applicateur 66. La bobine de récupération 88 peut être reliée à l'arbre de sortie 63 du moteur 64 par la courroie 65. Un revêtement de la bande adhésive 68 peut être enroulé autour de la bobine de récupération 88 par rotation de la bobine de récupération 88, conjointement à l'avancée du dispositif 46. La bobine de récupération 88 est particulièrement adaptée au mode de réalisation où la surface adhésive de la bande adhésive 68 est recouverte du revêtement, c'est un dire un film plastique protégeant la surface adhésive.

Le dispositif 46 peut être alimenté par une batterie 89 embarquée sur le châssis 50. En outre, les électroniques de contrôle, comprenant le processeur, peuvent être embarqués sur le châssis 50, par exemple dans un boitier 91.

L'émetteur 48 peut émettre tout type de motif lumineux 49 apte à être intercepté par le panneau 54. Ici, l'émetteur 48 est un émetteur laser, en particulier un émetteur de laser ponctuel. Ainsi, le motif lumineux 49 intercepté par le panneau 54 est un disque de lumière. L'émetteur 48 est placé à distance du dispositif 46, par exemple à une distance supérieure à 20 m, pour guider le dispositif 46. L'émetteur 48 forme une référence fixe pour le dispositif 46, permettant de guider le dispositif 46 lors de son déplacement.

On décrit par la suite un procédé pour réaliser des déplacements selon la trajectoire rectiligne. Le déplacement est notamment réalisé par le dispositif 46 décrit ci-dessus.

Le procédé comprend E100 placer le dispositif 46 à distance de l'émetteur 48, par un utilisateur. Placer le dispositif peut comprendre positionner le dispositif 46 à distance de l'émetteur 48, par exemple à une distance supérieure à 20 m. Placer le dispositif peut en outre comprendre aligner le motif lumineux 49 projeté sur le panneau 54 par l'émetteur 48 avec la position de référence 76 sur le panneau 54. Le dispositif 46 est placé lorsque le motif lumineux 49 est projeté sur la position de référence 76. Placer le dispositif est réalisé par exemple jusqu'à ce que l'indicateur 78 du dispositif 46 indique que le motif lumineux 49 coïncide avec la position de référence 76.

Le procédé comprend E200 commander le moyen de déplacement motorisé 52 pour entrainer le déplacement du dispositif 46. En particulier, le moyen d'avancement 60 sous forme de galet 62 est entrainé en rotation par le moteur 64, activé par le processeur. Ici, le galet 62 est un galet applicateur 66 et le déplacement du dispositif 46 comprend, conjointement à la rotation du galet applicateur 66, l'application de la bande adhésive 68 au sol.

Le procédé comprend E300 détecter le motif lumineux 49 sur le panneau 54, en particulier pendant le déplacement du dispositif 46. Détecter le motif lumineux 49 comprend en particulier acquérir des images de la portion du panneau dans le champ de vision de la caméra, la portion du panneau comprenant la position de référence. Les images peuvent par exemple être acquises au minimum toutes les 4 ms, On évite ainsi de retarder la détection d'une déviation du dispositif 46 par rapport à la trajectoire rectiligne.

Le procédé comprend E400 comparer, par le processeur, la position du motif lumineux 49 sur le panneau 54 par rapport à la position de référence 76. Comparer peut comprendre traiter les images capturées par le capteur optique 56 pour détecter le motif lumineux 49 sur chaque image. Traiter les images pour détecter le motif lumineux sur chaque image peut par exemple être réalisé par colorimétrie et/ou granulométrie. Comparer peut en outre comprendre déterminer un écart entre la position de référence 76 et le motif lumineux 49. La comparaison peut par exemple déterminer que le motif lumineux 49 est décalé à gauche par rapport à la position de référence 76, indiquant que le dispositif 46 dévie vers la droite. A l'inverse, la comparaison peut déterminer que le motif lumineux 76 est décalé à droite par rapport à la position de référence 76, indiquant que le dispositif 46 dévie vers la gauche. Une éventuelle déviation verticale peut être liée aux irrégularités du sol, et peuvent être ignorées.

Lorsque la déviation est établie, le procédé comprend E500 commander, par le processeur, le moyen de déplacement motorisé 52, en particulier le train directionnel 58, pour rapprocher le motif lumineux 49 de la position de référence 76. Lorsque le dispositif 46 a dévié vers la gauche, le train directionnel 58 peut être commandé pour entrainer une rotation du dispositif 46 vers la droite. A l'inverse, lorsque le dispositif 46 a dévié vers la droite, le train directionnel 58 peut être commandé pour entrainer une rotation du dispositif 46 vers la gauche.

En outre, lorsque la déviation est établie, le procédé peut comprendre E600 une activation de l'indicateur visuel ou sonore, de sorte à indiquer à l'opérateur que la déviation a été détectée.

Les étapes E200, E300, E400, E500 de commander, détecter et comparer sont réalisées jusqu'à ce que le dispositif 46 atteigne l'émetteur 48. Lorsque le dispositif 46 applique une bande adhésive 68 au sol, à l'issu du procédé, une ligne droite de bande adhésive 68 est appliquée au sol entre la position initiale du dispositif 46 et l'émetteur 48.

## Revendications

1. Dispositif (46) configuré pour se déplacer suivant une trajectoire rectiligne, le dispositif comprenant :
- un châssis (50) ;
- un moyen de déplacement (52) motorisé, monté sur le châssis, le moyen de déplacement étant configuré pour déplacer le châssis suivant la trajectoire rectiligne ;
- un panneau (54), monté sur le châssis (50), le panneau agissant comme récepteur d'un émetteur (48) de lumière dirigé vers le dispositif (46) ;
- un capteur optique (56) comprenant un champ de vision, ledit champ de vision comprenant au moins une portion de la surface du panneau (54), ladite portion comprenant une position de référence (76); et
- un processeur configuré pour :
• détecter un motif lumineux (49) sur la portion de la surface du panneau (54) dans le champ de vision du capteur optique (56);
• comparer la position du motif lumineux (49) sur le panneau (54) par rapport à la position de référence (76) sur ledit panneau (54);
• commander le moyen de déplacement (52) motorisé pour corriger une déviation entre la position du motif lumineux (49) et la position de référence (76).

2. Dispositif (46) selon la revendication 1, dans lequel la position de référence (76) correspond au centre d'un repère du panneau (54), notamment le repère étant formé par quatre coins d'un rectangle.

3. Dispositif (46) selon l'une quelconque des revendications précédentes, comprenant en outre un moyen de marquage (70) monté sur le châssis (50), le moyen de marquage (70) étant configuré pour appliquer un marquage au sol, et le panneau (54) étant monté sur le châssis (50) au voisinage du moyen de marquage (70).

4. Dispositif (46) selon l'une quelconque des revendications précédentes, dans lequel le moyen de déplacement (52) motorisé comprend :
- un train directionnel (58) monté sur une première extrémité du châssis (50) et adapté à contrôler la direction de déplacement du dispositif (46) ;
- un moyen d'avancement (60) monté sur une deuxième extrémité du châssis (50), opposée à la première extrémité et configuré pour assurer le déplacement du dispositif (46).

5. Dispositif (46) selon les revendications 3 et 4, dans lequel le moyen d'avancement (60) et le moyen de marquage (70) comprennent un même galet applicateur (66) configuré à la fois pour appliquer une bande adhésive (68) au sol et pour assurer le déplacement du dispositif (46).

6. Dispositif (46) selon l'une quelconque des revendications précédentes, comprenant un indicateur (78) configuré pour indiquer lorsque le motif lumineux (49) est projeté sur la position de référence (76) sur le panneau (54).

7. Ensemble (44) de guidage linéaire comprenant :
- le dispositif (46) selon l'une quelconque des revendications précédentes, et
- un émetteur (48) configuré pour émettre un motif lumineux (49), l'émetteur étant positionné à distance du dispositif.

8. Ensemble (44) selon la revendication 7, dans lequel l'émetteur (48) est un émetteur laser, notamment laser ponctuel émettant un motif lumineux en forme de disque.

9. Ensemble (44) de guidage linéaire selon la revendication 7 ou 8, dans lequel l'émetteur (48) est configuré pour émettre sur une distance supérieure à 20 mètres.

10. Procédé pour réaliser des déplacements rectilignes comprenant :
- placer, par un utilisateur, un dispositif (46) selon l'une quelconque des revendications 1 à 6 à distance d'un émetteur (48) de lumière, de sorte à projeter un motif lumineux (49) sur la position de référence (76) sur le panneau (54) du dispositif (46);
- commander, par le processeur, le moyen de déplacement (52) motorisé pour entrainer le déplacement du dispositif (46);
- détecter, par le capteur optique (56), le motif lumineux (49) dans le champ de vision du capteur optique;
- comparer, par le processeur, la position du motif lumineux (49) sur le panneau (54) par rapport à la position de référence (76) sur le panneau (54);
- commander, par le processeur, le moyen de déplacement (52) motorisé pour corriger une déviation entre la position du motif lumineux (49) et la position de référence (76).

11. Procédé pour réaliser des déplacements rectilignes selon la revendication 10, dans lequel le moyen de déplacement (52) comprend un moyen d'avancement (60) comprenant un galet applicateur (66), et le déplacement du dispositif (46) comprend la rotation du galet applicateur (66) pour déplacer le dispositif (46) et, conjointement, appliquer une bande adhésive (48) au sol.

12. Procédé pour réaliser des déplacements rectilignes selon la revendication 10 ou 11, dans lequel le moyen de déplacement (52) motorisé comprend un train directionnel (58) adapté à contrôler la direction de déplacement du dispositif (46) ; et la commande du moyen de déplacement (52) pour corriger la déviation comprend : une activation du train directionnel (58) pour rapprocher la position du motif lumineux (49) sur le panneau (54) et la position de référence (76) sur le panneau (54).

13. Procédé pour réaliser des déplacements rectilignes selon l'une des revendications 10 à 12, dans lequel placer le dispositif (46) comprend positionner le dispositif jusqu'à ce qu'un l'indicateur (78) du dispositif (46) indique que le motif lumineux (49) est projeté sur la position de référence (76) sur le panneau (54).

14. Utilisation du dispositif (46) selon l'une des revendications 1 à 6, ou de l'ensemble selon l'une des revendications 7 à 9, ou encore de la méthode selon les revendications 10 à 13, pour l'application d'un marquage au sol linéaire, en particulier de bande adhésive, servant au guidage de véhicules à guidage automatique dans des entrepôts de stockage.
